# EUROPÄISCHE PATENTSCHRIFT

(11) **EP 3 101 255 B1**
(45) Veröffentlichungstag und Bekanntmachung des Hinweises auf die Patenterteilung: **18.04.2018**
(21) Anmeldenummer: 16001015.3
(22) Anmeldetag: 04.05.2016
(51) Int. Cl.: F02D 41/02, F01N 3/10, F01N 9/00

(54) **BETRIEBSVERFAHREN FÜR EINE ABGASREINIGUNGSANLAGE UND ENTSPRECHENDES ANTRIEBSSYSTEM**
OPERATING METHOD FOR AN EXHAUST GAS CLEANING DEVICE AND CORRESPONDING DRIVE SYSTEM
PROCEDE D'ENTRAINEMENT POUR UNE INSTALLATION D'EPURATION DE GAZ D'ECHAPPEMENT ET SYSTEME D'ENTRAINEMENT CORRESPONDANT

(30) Priorität: 03.06.2015 DE 102015007163
(43) Veröffentlichungstag der Anmeldung: 07.12.2016
(73) Patentinhaber: MAN Truck & Bus AG, 80995 München (DE)
(72) Erfinder: Prümm, Franz Werner, 56077 Koblenz (DE)
(74) Vertreter: v. Bezold & Partner Patentanwälte - PartG mbB

(56) Entgegenhaltungen:
- DE-A1- 10 141 842
- DE-A1- 10 162 115
- DE-A1- 10 338 181
- DE-A1- 19 843 859

## Beschreibung

Die Erfindung betrifft ein Betriebsverfahren für eine Abgasreinigungsanlage mit einem Abgaskatalysator (Dreiwegekatalysator) zur Abgasreinigung an einem Verbrennungsmotor, insbesondere in einem Kraftfahrzeug. Weiterhin betrifft die Erfindung ein Antriebssystem, insbesondere für ein Kraftfahrzeug mit einem Verbrennungsmotor und einem Abgaskatalysator.

Aus dem Stand der Technik sind zur Abgasreinigung an einem Verbrennungsmotor Abgasreinigungsanlagen bekannt, die Dreiwegekatalysatoren einsetzen. Derartige Dreiwegekatalysatoren unterliegen jedoch einer natürlichen und durch Umwelteinflüsse beeinflussten Alterung, wodurch die sogenannte "Light-off-Temperatur" zunimmt, ab welcher der Abgaskatalysator wirksam ist und eine ausreichende Reinigungswirkung bietet. Bei Verbrennungsmotoren mit relativ geringer Abgastemperatur besteht daher die Gefahr, dass in Teilen des Motorenkennfelds keine ausreichende Schadstoffkonvertierung in dem Dreiwegekatalysator stattfindet, da die "Light-off-Temperatur" des Abgaskatalysators im Betrieb nicht erreicht wird. Um dem entgegenzuwirken, wird in Abhängigkeit von dem Katalysatorzustand die Abgastemperatur erhöht, was beispielsweise durch eine Zündwinkelverstellung erfolgen kann. Als Maß für den Katalysatorzustand wird üblicherweise die Sauerstoffspeicherfähigkeit (OSC: Oxygen Storage Capacity) des Abgaskatalysators verwendet. Dieser OSC-Wert wird im Rahmen der On-Board-Diagnose ohnehin regelmäßig gemessen und steht daher als Messgröße im Motorsteuergerät zur Verfügung. Es ist also aus dem Stand der Technik bekannt, eine Katalysator-Kenngröße (OSC-Wert) des Abgaskatalysators zu ermitteln, welche die Reinigungswirkung des Abgaskatalysators wiedergibt. Weiterhin ist es aus dem Stand der Technik bekannt, in Abhängigkeit von der ermittelten Katalysator-Kenngröße des Abgaskatalysators motorische Maßnahmen durchzuführen (z. B. Zündwinkelverstellung), um die Reinigungswirkung des Abgaskatalysators zu verbessern, wenn die ermittelte Katalysator-Kenngröße (OSC-Wert) eine unzureichende Reinigungswirkung des Abgaskatalysators anzeigt.

Nachteilig an diesem bekannten Verfahren ist die Tatsache, dass die motorischen Maßnahmen (z. B. Zündwinkelspätverstellung) zur Verbesserung der Reinigungswirkung des Abgaskatalysators einen Kraftstoffmehrverbrauch und entsprechend erhöhte CO₂-Emissionen zur Folge haben. Es besteht also bei diesem bekannten Verfahren ein Zielkonflikt zwischen der Optimierung der Reinigungswirkung des Abgaskatalysators einerseits und der Minimierung des Kraftstoffverbrauchs und der CO₂-Emission andererseits.

Zum allgemeinen technischen Hintergrund ist auch hinzuweisen auf DE 103 38 181 A1, DE 198 43 859 A1, DE 101 41 842 A1 und DE 101 62 115A1.

Der Erfindung liegt deshalb die Aufgabe zugrunde, dieses Problem zu lösen.

Diese Aufgabe wird durch ein erfindungsgemäßes Betriebsverfahren für eine Abgasreinigungsanlage bzw. durch ein entsprechendes Antriebssystem gemäß den unabhängigen Ansprüchen gelöst.

Die Erfindung beruht auf der technisch-physikalischen Erkenntnis, dass der mit der Alterung des Abgaskatalysators verbundene Anstieg der "Light-off-Temperatur" nur in Teilen des Motorenkennfeldes problematisch ist, wenn die tatsächliche Abgastemperatur die alterungsbedingt angestiegene "Light-off-Temperatur" nicht übersteigt.

Beispielsweise ist die Abgastemperatur im Volllastbetrieb (z. B. bei einer schnellen Autobahnfahrt) in der Regel hinreichend groß, um auch eine altersbedingt angestiegene "Light-off-Temperatur" zu übersteigen, so dass in diesem Betriebspunkt auch keine motorischen Maßnahmen erforderlich sind, um die Reinigungswirkung des Abgaskatalysators zu verbessern. Vielmehr sollten solche verbrauchssteigernden motorischen Maßnahmen in einem solchen Betriebspunkt unterbleiben, da sie zur Verbesserung der Reinigungswirkung nicht erforderlich sind, aber den Kraftstoffverbrauch und damit die CO₂-Emissionen erhöhen würden.

In einem anderen Betriebspunkt (z. B. im Teillastbetrieb im Stadtverkehr) sind die Abgastemperaturen dagegen relativ niedrig und unterschreiten deshalb möglicherweise die altersbedingt angestiegene "Light-off-Temperatur" des Abgaskatalysators. In einem solchen Betriebspunkt ist es dann erforderlich, motorische Maßnahmen (z. B. Zündwinkelverstellung) zu ergreifen, um die Reinigungswirkung des Abgaskatalysators zu verbessern, wobei dann auch ein Kraftstoffmehrverbrauch und entsprechend erhöhte CO₂-Emissionen in Kauf genommen werden.

Die Erfindung sieht deshalb vor, dass die motorischen Maßnahmen (z. B. Zündwinkelverstellung) zur Verbesserung der Reinigungswirkung des Abgaskatalysators nicht nur - wie beim Stand der Technik - in Abhängigkeit von der ermittelten Katalysator-Kenngröße (OSC-Wert) durchgeführt werden, sondern auch in Abhängigkeit von dem Betriebspunkt des Verbrennungsmotors. Vorzugsweise werden die motorischen Maßnahmen zur Verbesserung der Reinigungswirkung des Abgaskatalysators im Rahmen der Erfindung nur dann durchgeführt, wenn zwei Bedingungen erfüllt sind. Zum einen muss die ermittelte Katalysator-Kenngröße (OSC-Wert) anzeigen, dass die Reinigungswirkung des Abgaskatalysators abgesunken ist. Zum anderen muss der Betriebspunkt des Verbrennungsmotors innerhalb des Motorkennfeldes in einem Bereich liegen, in dem aktuell eine Verbesserung der Reinigungswirkung erforderlich ist, so dass dann entsprechend motorische Maßnahmen zur Verbesserung der Reinigungswirkung des Abgaskatalysators eingeleitet werden müssen. Beispielsweise sind im Volllastbetrieb bei hohen Abgastemperaturen in der Regel keine motorischen Maßnahmen erforderlich, um die Reinigungswirkung des Abgaskatalysators zu verbessern, wohingegen ein Teillastbetrieb (z. B. im Stadtverkehr) mit entsprechend niedrigen Abgastemperaturen die Verbesserung der Reinigungswirkung erforderlich machen kann.

In einem bevorzugten Ausführungsbeispiel der Erfindung hängt die Durchführung der motorischen Maßnahmen (z. B. Zündwinkelverstellung) zur Verbesserung der Reinigungswirkung des Abgaskatalysators nicht nur qualitativ von dem aktuellen Betriebspunkt des Verbrennungsmotors ab, in dem Sinne, dass entweder motorische Maßnahmen eingeleitet werden oder nicht. Vielmehr ist in dem bevorzugten Ausführungsbeispiel der Erfindung auch vorgesehen, dass die Intensität der motorischen Maßnahme zur Verbesserung der Reinigungswirkung in Abhängigkeit von dem Betriebspunkt des Verbrennungsmotors und in Abhängigkeit der ermittelten Katalysator-Kenngröße quantitativ flexibel festgelegt wird.

Bei einer Zündwinkelverstellung kann beispielsweise der Verstellwinkel als Funktion der ermittelten Katalysator-Kenngröße und/oder als Funktion des aktuellen Betriebspunktes des Verbrennungsmotors flexibel festgelegt werden, d.h. mit betriebspunktabhängig unterschiedlichen Verstellwinkeln. Dabei ist es erfindungsgemäß, dass die motorischen Maßnahmen zur Verbesserung der Reinigungswirkung des Abgaskatalysators nur in einem bestimmten Teilbereich des Motorkennfeldes eingeleitet werden, wobei dieser Teilbereich in Abhängigkeit von der ermittelten Katalysator-Kenngröße flexibel festgelegt werden kann. Bei einem Abgaskatalysator mit einer großen Sauerstoffspeicherfähigkeit werden die motorischen Maßnahmen zur Verbesserung der Reinigungswirkung des Abgaskatalysators dann nur in einem kleinen Teilbereich des Motorkennfeldes freigegeben, wohingegen die motorischen Maßnahmen zur Verbesserung der Reinigungswirkung des Abgaskatalysators bei einem Abgaskatalysator mit einer alterungsbedingt geringen Sauerstoffspeicherfähigkeit in einem entsprechend größeren Teilbereich des Motorkennfeldes freigegeben werden.

Es wurde bereits vorstehend darauf hingewiesen, dass die motorischen Maßnahmen (z. B. Zündwinkelverstellung) zur Verbesserung der Reinigungswirkung des Abgaskatalysators in der Regel zu einem Kraftstoffmehrverbrauch und zu entsprechend erhöhten CO₂-Emissionen führen. Die Erhöhung des Kraftstoffverbrauchs durch die motorischen Maßnahmen (z. B. Zündwinkelverstellung) hängt auch von dem aktuellen Betriebspunkt des Verbrennungsmotors innerhalb des Motorkennfeldes ab. So führen die motorischen Maßnahmen (z. B. Zündwinkelverstellung) zur Verbesserung der Reinigungswirkung des Abgaskatalysators in einigen Betriebspunkten nur zu einem relativ geringen Kraftstoffmehrverbrauch und in anderen Betriebspunkten zu einem relativ hohen Kraftstoffmehrverbrauch. Die Erfindung sieht deshalb vorzugsweise vor, dass der Teilbereich des Motorenkennfeldes für die Durchführung der motorischen Maßnahmen zur Verbesserung der Reinigungswirkung des Abgaskatalysators mit zunehmender Verschlechterung der ermittelten Katalysator-Kenngröße (OSC-Wert) zunehmend ausgedehnt wird und zwar ausgehend von einem Bereich mit einer relativ geringen Erhöhung des Kraftstoffverbrauchs hin zu einem Bereich mit einer relativ großen Erhöhung des Kraftstoffverbrauchs. Bei einer geringfügigen Verschlechterung der Reinigungswirkung des Abgaskatalysators werden die motorischen Maßnahmen zur Verbesserung der Reinigungswirkung des Abgaskatalysators dann auch nur in einem Teilbereich des Motorkennfeldes durchgeführt, in dem die motorischen Maßnahmen nur einen geringen Kraftstoffmehrverbrauch verursachen. Bei einer größeren Verschlechterung der Reinigungswirkung des Abgaskatalysators werden die motorischen Maßnahmen (z. B. Zündwinkelverstellung) zur Verbesserung der Reinigungswirkung des Abgaskatalysators dagegen auch in Teilbereichen des Motorkennfeldes freigegeben, indem die motorischen Maßnahmen zu einem größeren Kraftstoffmehrverbrauch führen.

Es wurde bereits vorstehend erwähnt, dass es sich bei der ermittelten Katalysator-Kenngröße um die Sauerstoffspeicherfähigkeit des Abgaskatalysators handelt. Dies ist vorteilhaft, weil der sogenannte OSC-Wert im Rahmen der On-Board-Diagnose ohnehin regelmäßig gemessen wird und deshalb im Motorsteuergerät als Messgröße zur Verfügung steht.

Weiterhin ist zu der Katalysator-Kenngröße zu erwähnen, dass diese vorzugsweise nur einmal während eines Fahrzyklus ermittelt wird, wobei sich ein Fahrzyklus vom Einschalten der Zündung und dem anschließenden Motorstart bis zum anschließenden Motorstopp und dem Ausschalten der Zündung erstreckt. Die Messung des aktuellen Betriebspunktes des Verbrennungsmotors erfolgt dagegen vorzugsweise laufend während des Betriebs, d.h. in kurzen Zeitabständen vielfach während eines Fahrzyklus.

Der vorstehend erwähnte Betriebspunkt des Verbrennungsmotors gibt mindestens zwei der folgenden Größen wieder:
- Drehzahl der Kurbelwelle,
- Drehzahl der Nockenwelle,
- Lastmoment,
- Luftmassenstrom,
- Druck im Saugrohr.
In dem bevorzugten Ausführungsbeispiel der Erfindung ist das Motorkennfeld jedoch zweidimensional, wobei der Betriebspunkt die Drehzahl von Kurbelwelle bzw. Nockenwelle und das Lastmoment wiedergibt.

Weiterhin wurde vorstehend bereits erwähnt, dass es sich bei der motorischen Maßnahme zur Verbesserung der Reinigungswirkung des Abgaskatalysators um eine Zündwinkelverstellung handeln kann, wobei der Zündwinkel vorzugsweise in Richtung eines späteren Zündzeitpunkts verstellt wird. Eine derartige Zündwinkelverstellung zur Verbesserung der Reinigungswirkung des Abgaskatalysators ist an sich aus dem Stand der Technik bekannt und muss deshalb nicht weiter beschrieben werden. Zur Vermeidung von Missverständnissen ist jedoch darauf hinzuweisen, dass die Zündwinkelverstellung im Stand der Technik nur in Abhängigkeit von dem OSC-Wert durchgeführt wird, nicht dagegen in Abhängigkeit von dem aktuellen Betriebspunkt des Verbrennungsmotors.

Darüber hinaus besteht im Rahmen der Erfindung die Möglichkeit, dass es sich bei der motorischen Maßnahme zur Verbesserung der Reinigungswirkung des Abgaskatalysators um eine Veränderung des Lambda-Wertes handelt, d.h. des Verhältnisses von Luft und Kraftstoff im Vergleich zu einem stöchiometrischen Gemisch mit λ=1. Zur Verbesserung der Reinigungswirkung des Abgaskatalysators wird der Lambda-Wert dann vorzugsweise hin zu einem fetteren Kraftstoff-Luft-Gemisch verstellt.

Die beiden vorstehend genannten motorischen Maßnahmen (Zündwinkelverstellung, Lambda-Verstellung) können im Rahmen der Erfindung allein oder in Kombination miteinander eingesetzt werden. Darüber hinaus können im Rahmen der Erfindung auch andere motorische Maßnahmen eingesetzt werden, um die Reinigungswirkung des Abgaskatalysators zu verbessern.

Neben dem vorstehend beschriebenen Betriebsverfahren beansprucht die Erfindung auch Schutz für ein entsprechendes Antriebssystem, das beispielsweise in einem Kraftfahrzeug (z. B. Lastkraftwagen, Omnibus) eingesetzt werden kann, um das Kraftfahrzeug anzutreiben.

Das erfindungsgemäße Antriebssystem weist zunächst einen Verbrennungsmotor auf, wobei es sich um einen Otto-Motor handelt, insbesondere um einen Otto-motorisch betriebenen Gasmotor.

Weiterhin umfasst das erfindungsgemäße Antriebssystem einen Abgaskatalysator (Dreiwegekatalysator), der im Abgasstrang des Verbrennungsmotors angeordnet ist.

Darüber hinaus umfasst das erfindungsgemäße Antriebssystem eine Steuereinheit, die eine Katalysator-Kenngröße (OSC-Wert) des Abgaskatalysators ermittelt, welche die Reinigungswirkung des Abgaskatalysators wiedergibt. Vorzugsweise wird diese Katalysator-Kenngröße (OSC-Wert) nur einmal während eines Fahrzyklus zwischen Motorstart und Motorstopp ermittelt.

Ferner ermittelt die Steuereinheit einen Betriebspunkt des Verbrennungsmotors innerhalb eines Motorkennfeldes, wobei der Betriebspunkt beispielsweise Drehzahl und Lastmoment wiedergegeben kann.

Darüber hinaus führt die Steuereinheit dann motorische Maßnahmen zur Verbesserung der Reinigungswirkung des Abgaskatalysators durch, wenn die ermittelte Katalysator-Kenngröße (OSC-Wert) anzeigt, dass die Reinigungswirkung des Abgaskatalysators unzureichend ist.

Das erfindungsgemäße Antriebssystem zeichnet sich nun gegenüber dem Stand der Technik dadurch aus, dass die Steuereinheit die motorische Maßnahme zur Verbesserung der Reinigungswirkung des Abgaskatalysators auch in Abhängigkeit von dem Betriebspunkt des Verbrennungsmotors durchführt, wie es bereits vorstehend in Bezug auf das erfindungsgemäße Verfahren ausführlich beschrieben worden ist.

Schließlich ist noch zu erwähnen, dass die Erfindung auch Schutz beansprucht für ein Kraftfahrzeug (z. B. Nutzfahrzeug, wie beispielsweise Lastkraftwagen oder Omnibus), das mit einem solchen erfindungsgemäßen Antriebssystem ausgestattet ist.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1A: ein Flussdiagramm zur Ermittlung des OSC-Werts und der Intensität der motorischen Maßnahmen zur Verbesserung der Reinigungswirkung des Abgaskatalysators,
- Figur 1B: ein Flussdiagramm zur Verdeutlichung der Zündwinkelverstellung in Abhängigkeit von dem aktuellen Betriebspunkt des Verbrennungsmotors,
- Figur 1C: ein Flussdiagramm zur Verdeutlichung der Lambdaverstellung in Abhängigkeit von dem aktuellen Betriebspunkt des Verbrennungsmotors,
- Figur 2: ein exemplarisches Motorkennfeld mit verschiedenen Teilbereichen zur Betriebspunktabhängigen Festlegung der motorischen Maßnahmen (z. B. Zündwinkelverstellung, Lambdaverstellung) zur Verbesserung der Reinigungswirkung des Abgaskatalysators sowie
- Figur 3: ein erfindungsgemäßes Antriebssystem für ein Kraftfahrzeug.

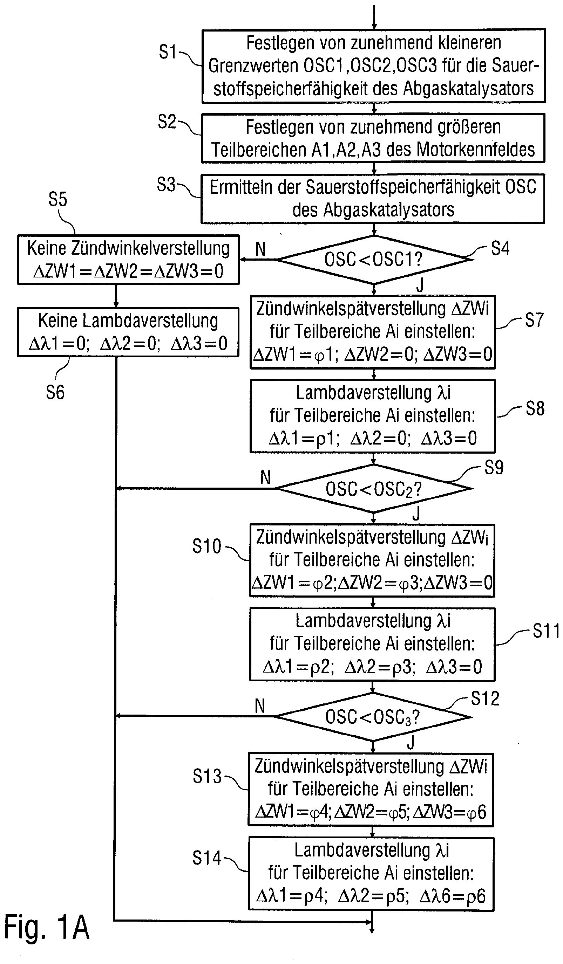

Figur 1A zeigt ein Flussdiagramm zur Verdeutlichung eines Teils des erfindungsgemäßen Betriebsverfahrens, wobei dieser Teil nur einmal während eines Fahrzyklus durchlaufen wird, d.h. zwischen Einschalten der Zündung und Motorstart einerseits und Ausschalten der Zündung und Motorstopp andererseits.

In einem ersten Schritt S1 werden zunächst zunehmend kleinere Grenzwerte OSC1, OSC2, ..., OSCn für die Sauerstoffspeicherfähigkeit (OSC: Oxygen Storage Capacity) des Abgaskatalysators festgelegt. Es gilt OSC1>OSC2>...>OSCn.

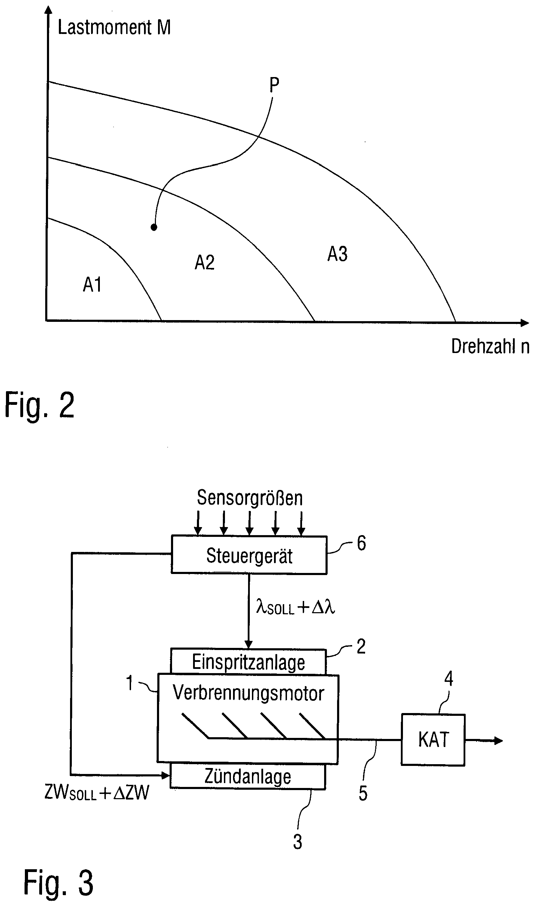

In einem weiteren Schritt S2 werden dann zunehmend größere Teilbereiche A1, A2, ... An innerhalb des Motorkennfeldes festgelegt, wobei das Motorkennfeld in Figur 2 schematisch dargestellt ist. Für die Teilbereiche A1, A2, ...An gilt also A1<A2<... <An.

Die folgende Beschreibung und die Figuren zeigt Beispielhaft ein System mit drei Teilbereichen und drei OSC-Grenzwerten.

In einem Schritt S3 wird dann der aktuelle Wert OSC der Sauerstoffspeicherfähigkeit des Abgaskatalysators ermittelt. Dies kann beispielsweise durch einfaches Auslesen aus dem entsprechenden Messwertspeicher des Motorsteuergeräts geschehen, da der OSC-Wert ohnehin im Rahmen der On-Board-Diagnose ermittelt wird.

In einem weiteren Schritt S4 wird dann geprüft, ob der aktuelle Wert OSC kleiner ist als der größte OSC-Wert OSC1.

Falls dies nicht der Fall ist, so wird in den Schritten S5 und S6 festgelegt, dass keine motorischen Maßnahmen zur Verbesserung der Reinigungswirkung des Abgaskatalysators eingeleitet werden, d.h. weder eine Zündwinkelverstellung (Schritt S5) noch eine LambdaVerstellung (Schritt S6). Dies gilt dann unabhängig von dem aktuellen Betriebspunkt P des Verbrennungsmotors.

Falls der aktuelle OSC-Wert jedoch den größten Grenzwert OSC1 unterschreitet, so wird in einem Schritt S7 eine Zündwinkelverstellung ΔZWi für die verschiedenen Teilbereiche A1, A2, A3 eingestellt. Hierbei beschränkt sich die Zündwinkelverstellung zunächst auf den kleinsten Teilbereich A1 des Motorkennfeldes, wohingegen für die anderen Teilbereiche A2, A3 noch keine Zündwinkelverstellung eingestellt wird. Dies ist zunächst sinnvoll, da bei einem OSC-Wert OSC2<OSC<OSC1 nur relativ geringfügige motorische Maßnahmen erforderlich sind, um die Reinigungswirkung zu verbessern. Es wäre deshalb nicht sinnvoll, die Zündwinkelverstellung auch in den Teilbereichen A2 und A3 durchzuführen, da dies dort nur zu einem unerwünschten Kraftstoffmehrverbrauch führen würde.

Darüber hinaus wird dann auch in einem Schritt S8 eine Lambdaverstellung für die Teilbereiche A1, A2, A3 eingestellt, wobei auch die Lambdaverstellung auf den Teilbereich A1 beschränkt ist.

In einem Schritt S9 wird dann geprüft, ob der aktuelle OSC-Wert den nächstkleineren Grenzwert OSC2 unterschreitet, was auf eine weitergehende Verschlechterung der Sauerstoffspeicherfähigkeit des Abgaskatalysators hindeutet.

Falls dies der Fall ist, so erfolgt in den Schritten S10 und S11 eine andere Festlegung der Zündwinkelspätverstellungen und der Lambdaverstellungen für die einzelnen Teilebereiche A1, A2, A3 des Motorkennfeldes. Bei dieser weitergehenden Verschlechterung der Sauerstoffspeicherfähigkeit werden dann auch für den Teilbereich A2 motorische Maßnahmen zur Verbesserung der Reinigungswirkung des Abgaskatalysators vorgesehen.

Schließlich wird dann in einem Schritt S12 geprüft, ob der aktuelle OSC-Wert OSC auch den kleinsten Grenzwert OSC3 unterschreitet.

Falls dies der Fall ist, so wird in den Schritten S13 und S14 die Zündwinkelverstellung und die Lambdaverstellung für die einzelnen Teilbereiche A1, A2, A3 des Motorkennfeldes festgelegt. Dies bedeutet, dass dann in allen Teilbereichen A1, A2, A3 motorische Maßnahmen zur Verbesserung der Reinigungswirkung des Abgaskatalysators durchgeführt werden können.

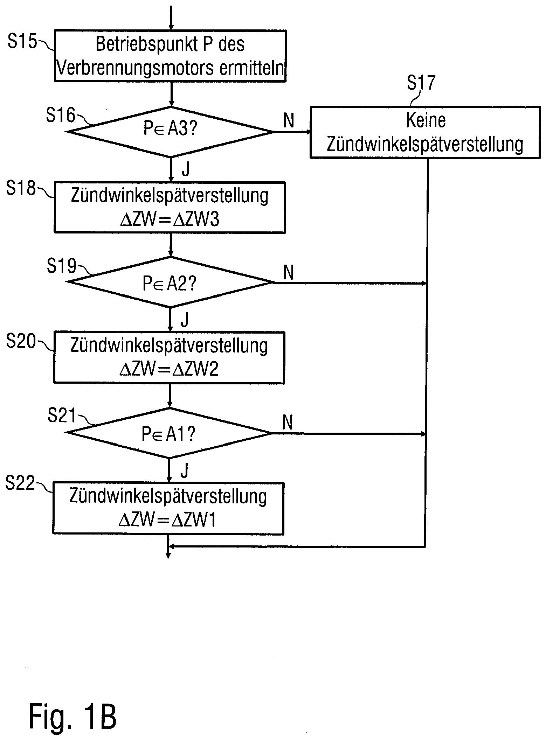

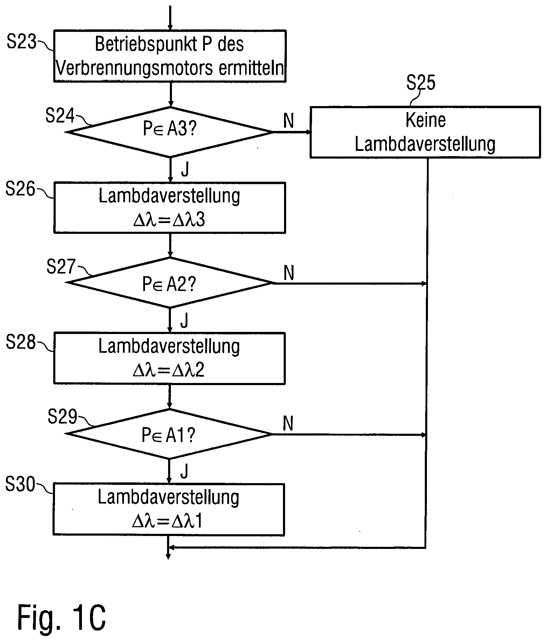

Das Flussdiagramm gemäß Figur 1 verdeutlicht also die Festlegung der Intensität der motorischen Maßnahmen in Abhängigkeit von dem OSC-Wert, der innerhalb eines Fahrzyklus nur einmal gemessen wird. Darüber hinaus definiert das Flussdiagramm gemäß Figur 1A die Teilbereiche des Motorkennfeldes, in denen überhaupt motorische Maßnahmen zur Verbesserung der Reinigungswirkung des Abgaskatalysators durchgeführt werden.

Das Flussdiagramm gemäß Figur 1B zeigt den laufenden Betrieb des Verbrennungsmotors, wobei die Schritte S15-S22 während des Betriebs des Kraftfahrzeugs laufend wiederholt werden. Im Gegensatz zu dem Flussdiagramm gemäß Figur 1B wird das Flussdiagramm gemäß Figur 1B also während des Betriebs des Kraftfahrzeugs immer wieder in kurzen Zeitabständen durchlaufen.

In einem ersten Schritt S15 wird zunächst der aktuelle Betriebspunkt P des Verbrennungsmotors innerhalb des Motorkennfeldes gemäß Figur 2 ermittelt, wobei der Betriebspunkt P in diesem Ausführungsbeispiel Lastmoment M und Drehzahl n wiedergibt.

In einem Schritt S16 wird dann geprüft, ob der aktuelle Betriebspunkt P innerhalb des umfassenden Teilbereichs A3 des Motorkennfeldes liegt. Falls dies nicht der Fall ist, so liegt der Betriebspunkt P in keinem der Teilbereiche A1, A2, A3, so dass dann in einem Schritt S17 festgelegt wird, dass keine Zündwinkelspätverstellung erfolgt.

Andernfalls wird dagegen in einem Schritt S18 eine Zündwinkelspätverstellung ΔZW auf den Wert ΔZW3 festgelegt, der zuvor in dem Flussdiagramm gemäß Figur 1A festgelegt wurde.

In einem weiteren Schritt S19 wird dann geprüft, ob der Betriebspunkt P auch innerhalb des engeren Teilbereichs A2 liegt.

Falls dies der Fall ist, so wird in einem Schritt S20 die Zündwinkelspätverstellung ΔZW auf den Wert ΔZW2 festgesetzt, der in dem Flussdiagramm gemäß Figur 1A für den Teilbereich A2 vorgesehen wurde.

Anschließend wird dann in einem Schritt S21 geprüft, ob der aktuelle Betriebspunkt P innerhalb des engeren Teilbereichs A1 liegt.

Falls dies der Fall ist, so wird in dem Schritt S22 die Zündwinkelspätverstellung ΔZW auf den Wert ΔZW1 festgesetzt, der zuvor in dem Flussdiagramm gemäß Figur 1A für den Teilbereich A1 vorgesehen wurde.

Das Flussdiagramm gemäß Figur 1C zeigt die Lambdaverstellung, die während des laufenden Betriebs des Verbrennungsmotors ebenfalls in geringen Zeitabständen wiederholt wird.

Auch hierbei wird in einem Schritt S23 zunächst der aktuelle Betriebspunkt des Verbrennungsmotors ermittelt.

Anschließend wird dann in einem Schritt S24 geprüft, ob der aktuelle Betriebspunkt P innerhalb des umfassenden Teilbereichs A3 liegt.

Falls dies nicht der Fall ist, so wird in dem Schritt S25 festgelegt, dass keine Lambdaverstellung erfolgt.

Andernfalls wird in einem Schritt S26 die Lambdaverstellung Δλ auf den Wert Δλ3 festgesetzt, der zuvor in dem Flussdiagramm gemäß Figur 1A für den Teilbereich A3 festgelegt wurde.

Anschließend wird in einem Schritt S27 geprüft, ob sich der aktuelle Betriebspunkt P des Verbrennungsmotors in dem kleineren Teilbereich A2 befindet.

Falls dies der Fall ist, so wird die Lambdaverstellung Δλ in dem Schritt S28 auf den Wert Δλ2 festgesetzt, der in dem Flussdiagramm gemäß Figur 1A für den Teilbereich A2 vorgesehen wurde.

Anschließend wird dann in einem Schritt S29 geprüft, ob der aktuelle Betriebspunkt P des Verbrennungsmotors sogar in dem engsten Teilbereich A1 liegt.

Falls dies der Fall ist, so wird die Lambdaverstellung Δλ in dem Schritt S30 auf den Wert Δλ1 festgesetzt, der in dem Flussdiagramm gemäß Figur 1A für den Teilbereich A1 vorgesehen wurde.

Figur 3 zeigt eine vereinfachte schematische Darstellung eines erfindungsgemäßen Antriebssystems mit einem Verbrennungsmotor 1 mit einer Einspritzanlage 2, einer Zündanlage 3 und einem Abgaskatalysator 4, der im Abgasstrang 5 des Verbrennungsmotors 1 angeordnet ist.

Darüber hinaus weist das Antriebssystem noch ein Steuergerät 6 auf, das von zahlreichen Sensorgrößen angesteuert wird und die Einspritzanlage 2 mit einem Lambda-Wert ansteuert, wobei das Steuergerät 6 eine entsprechende Lambdaverstellung ermöglicht, um die Reinigungswirkung des Abgaskatalysators 4 zu verbessern.

Darüber hinaus steuert das Steuergerät 6 auch die Zündanlage 3 an und ermöglicht eine entsprechende Zündwinkelspätverstellung, wie bereits vorstehend ausführlich beschrieben worden ist.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand der Unteransprüche unabhängig von den jeweils in Bezug genommenen Ansprüchen und insbesondere ohne die Merkmale des Hauptanspruchs.

### Bezugszeichenliste

- 1: Verbrennungsmotor
- 2: Einspritzanlage
- 3: Zündanlage
- 4: Abgaskatalysator
- 5: Abgasstrang
- ZW_{SOLL}: Sollwert des Zündwinkels
- ΔZW: Verstellwinkel des Zündwinkels zur Verbesserung der Reinigungswirkung des Abgaskatalysators
- ΔZW1: Verstellwinkel des Zündwinkels im Teilbereich A1
- ΔZW2: Verstellwinkel des Zündwinkels im Teilbereich A2
- ΔZW3: Verstellwinkel des Zündwinkels im Teilbereich A3
- λ_{SOLL}: Sollwert des Lambdawerts
- Δλ: Verstellwert des Lambdawerts zur Verbesserung der Reinigungswirkung des Abgaskatalysators
- Δλ1: Verstellwert des Lambdawerts im Teilbereich A1
- Δλ2: Verstellwert des Lambdawerts im Teilbereich A2
- Δλ3: Verstellwert des Lambdawerts im Teilbereich A3
- P: Betriebspunkt des Verbrennungsmotors
- M: Lastmoment des Verbrennungsmotors
- n: Drehzahl des Verbrennungsmotors
- A1, A2, A3: Teilbereiche des Motorkennfeldes
- OSC: Sauerstoffspeicherfähigkeit des Abgaskatalysators

## Patentansprüche

1. Betriebsverfahren für eine Abgasreinigungsanlage mit einem Abgaskatalysator (4), nämlich einem Dreiwegekatalysator, zur Abgasreinigung an einem Verbrennungsmotor (1), der als Ottomotor ausgebildet ist, insbesondere in einem Kraftfahrzeug,
mit den folgenden Schritten:
a) Ermitteln einer Katalysator-Kenngröße (OSC) des Abgaskatalysators (4), wobei die Katalysator-Kenngröße (OSC) die Sauerstoffspeicherfähigkeit des Abgaskatalysators (4) ist und die Reinigungswirkung des Abgaskatalysators (4) wiedergibt, und
b) Durchführen einer motorischen Maßnahme zur Verbesserung der Reinigungswirkung des Abgaskatalysators (4), wenn die Katalysator-Kenngröße (OSC) eine unzureichende Reinigungswirkung des Abgaskatalysators (4) anzeigt, und
c) Ermitteln eines Betriebspunkts (P) des Verbrennungsmotors (1) in einem Motorkennfeld, wobei der Betriebspunkt (P) des Verbrennungsmotors (1) mindestens zwei der folgenden Größen wiedergibt:
c1) Drehzahl (n) der Kurbelwelle,
c2) Drehzahl der Nockenwelle,
c3) Lastmoment (M),
c4) Luftmassenstrom,
c5) Druck im Saugrohr,
**dadurch gekennzeichnet**,
d) dass die motorische Maßnahme zur Verbesserung der Reinigungswirkung des Abgaskatalysators (4) zusätzlich in Abhängigkeit von dem Betriebspunkt (P) des Verbrennungsmotors (1) eingeleitet wird, wenn der Betriebspunkt (P) in einem festgelegten Teilbereich (A1,A2,...,An) des Motorkennfeldes liegt.

2. Betriebsverfahren nach Anspruch 1, **dadurch gekennzeichnet, dass** die Intensität der motorischen Maßnahme zur Verbesserung der Reinigungswirkung des Abgaskatalysators (4) in Abhängigkeit von dem Betriebspunkt (P) des Verbrennungsmotors (1) und in Abhängigkeit von der ermittelten Katalysator-Kenngröße (OSC) flexibel festgelegt wird.

3. Betriebsverfahren nach einem der vorhergehenden Ansprüche, **gekennzeichnet durch** folgende Schritte:
a) Festlegen des Teilbereichs (A1, A2,..., An) des Motorkennfelds für die motorische Maßnahme zur Verbesserung der Reinigungswirkung des Abgaskatalysators (4),
b) Prüfung, ob der Betriebspunkt (P) des Verbrennungsmotors (1) innerhalb des Teilbereichs (A1, A2, ..., An) liegt, und
c) Durchführen der motorischen Maßnahme zur Verbesserung der Reinigungswirkung des Abgaskatalysators (4) nur dann, wenn der Betriebspunkt (P) des Verbrennungsmotors (1) innerhalb des festgelegten Teilbereichs (A1, A2,..., An) des Motorkennfeldes liegt.

4. Betriebsverfahren nach Anspruch 3, **dadurch gekennzeichnet, dass** der Teilbereich (A1, A2,..., An) des Motorkennfeldes für die motorische Maßnahme zur Verbesserung der Reinigungswirkung des Abgaskatalysators (4) in Abhängigkeit von der ermittelten Katalysator-Kenngröße (OSC) festgelegt wird.

5. Betriebsverfahren nach Anspruch 4, **gekennzeichnet durch** folgende Schritte:
a) Ermitteln der Position des Betriebspunkts (P) des Verbrennungsmotors (1) innerhalb des Teilbereichs (A1, A2, ..., An) des Motorkennfelds, und
b) Festlegen der Intensität der motorischen Maßnahme zur Verbesserung der Reinigungswirkung des Abgaskatalysators (4) in Abhängigkeit von der Position des Betriebspunktes innerhalb des Teilbereichs (A1, A2, ..., An) des Motorkennfelds.

6. Betriebsverfahren nach einem der Ansprüche 3 bis 5, **dadurch gekennzeichnet,**
a) **dass** die motorische Maßnahme zur Verbesserung der Reinigungswirkung des Abgaskatalysators (4) den Kraftstoffverbrauch des Verbrennungsmotors (1) erhöht, und
b) **dass** die Erhöhung des Kraftstoffverbrauchs von dem Betriebspunkt (P) abhängt, in dem die motorische Maßnahme zur Verbesserung der Reinigungswirkung des Abgaskatalysators (4) durchgeführt wird, und
c) **dass** der Teilbereich (A1, A2, ..., An) des Motorkennfeldes für die Durchführung der motorischen Maßnahme zur Verbesserung der Reinigungswirkung des Abgaskatalysators (4) mit zunehmender Verschlechterung der Katalysator-Kenngröße (OSC) zunehmend ausgedehnt wird, und
d) **dass** die Ausdehnung des Teilbereichs (A1, A2, ..., An) des Motorkennfeldes für die Durchführung der motorischen Maßnahme zur Verbesserung der Reinigungswirkung des Abgaskatalysators (4) ausgeht von einem Bereich (A1) mit einer relativ geringen Erhöhung des Kraftstoffverbrauchs hin zu einem Bereich (An) mit einer relativ großen Erhöhung des Kraftstoffverbrauchs.

7. Betriebsverfahren nach einem der vorhergehenden Ansprüche,
**dadurch gekennzeichnet,**
a) **dass** in dem Verbrennungsmotor (1) ein Kraftstoff-Luft-Gemisch jeweils an einem bestimmten Zündwinkel (ZW) gezündet wird, und
b) **dass** die motorische Maßnahme zur Verbesserung der Reinigungswirkung des Abgaskatalysators (4) eine Verstellung des Zündwinkels (ZW) umfasst, insbesondere in Richtung eines späteren Zündzeitpunkts.

8. Betriebsverfahren nach einem der vorhergehenden Ansprüche,
**dadurch gekennzeichnet,**
a) **dass** im Abgas ein bestimmter Lambdawert (λ) eingestellt wird, der das Verhältnis von Luft zu Brennstoff im Vergleich zu einem stöchiometrischen Gemisch wiedergibt, und
b) **dass** die motorische Maßnahme zur Verbesserung der Reinigungswirkung des Abgaskatalysators (4) eine Veränderung des Lambdawerts (λ) umfasst, insbesondere hin zu einem fetteren Kraftstoff-Luft-Gemisch.

9. Antriebssystem, insbesondere für ein Kraftfahrzeug, mit
a) einem Verbrennungsmotor (1), nämlich einem Ottomotor, insbesondere einem ottomotorisch betriebenen Gasmotor,
b) einem Abgaskatalysator (4), nämlich einem Dreiwegekatalysator, im Abgasstrang des Verbrennungsmotors (1), und
c) einer Steuereinheit (6), wobei
c1) die Steuereinheit (8) eine Katalysator-Kenngröße (OSC) des Abgaskatalysators (4) ermittelt, wobei die ermittelte Katalysator-Kenngröße (OSC)
c1a) die Sauerstoffspeicherfähigkeit des Abgaskatalysators (4) ist und
c1b) die Reinigungswirkung des Abgaskatalysators (4) wiedergibt und
c1c) vorzugsweise nur einmal während eines Fahrzyklus zwischen Motorstart und Motorstopp ermittelt wird, und
c2) die Steuereinheit (8) einen Betriebspunkt (P) des Verbrennungsmotors (1) innerhalb eines Motorkennfelds ermittelt, wobei der ermittelte Betriebspunkt (P) des Verbrennungsmotors (1) mindestens zwei der folgenden Größen wiedergibt:
c2a) Drehzahl (n) der Kurbelwelle,
c2b) Drehzahl der Nockenwelle,
c2c) Lastmoment (M),
c2d) Luftmassenstrom,
c2e) Druck im Saugrohr,
und
c3) die Steuereinheit (8) die motorische Maßnahmen zur Verbesserung der Reinigungswirkung des Abgaskatalysators (4) durchführt, wenn die Katalysator-Kenngröße (OSC) eine unzureichende Reinigungswirkung des Abgaskatalysators (4) anzeigt,
**dadurch gekennzeichnet**,
d) dass die Steuereinheit (6) die motorische Maßnahme zur Verbesserung der Reinigungswirkung des Abgaskatalysators (4) zusätzlich in Abhängigkeit von dem Betriebspunkt (P) des Verbrennungsmotors (1) durchführt, wenn der Betriebspunkt (P) in einem festgelegten Teilbereich (A1,A2,...,An) des Motorkennfeldes liegt.

10. Kraftfahrzeug, insbesondere Nutzfahrzeug, insbesondere Lastkraftwagen oder Omnibus, mit einem Antriebssystem nach Anspruch 9.

## Claims

1. An operating method for an exhaust-gas cleaning system with an exhaust-gas catalytic converter (4), namely a three-way catalytic converter, for cleaning of exhaust gas in respect of an internal-combustion engine (1) which is designed as a spark-ignition engine, in particular in a motor vehicle,
with the following steps:
a) ascertaining a catalytic-converter parameter (OSC) of the exhaust-gas catalytic converter (4), the catalytic-converter parameter (OSC) being the oxygen storage capacity of the exhaust-gas catalytic converter (4) and representing the cleaning effect of the exhaust-gas catalytic converter (4) and
b) implementing an engine-specific measure for improving the cleaning effect of the exhaust-gas catalytic converter (4) if the catalytic-converter parameter (OSC) indicates an inadequate cleaning effect of the exhaust-gas catalytic converter (4), and
c) ascertaining an operating point (P) of the internal-combustion engine (1) in an engine map, wherein the operating point (P) of the internal-combustion engine (1) represents at least two of the following quantities:
c1) rotational speed (n) of the crankshaft,
c2) rotational speed of the camshaft,
c3) load torque (M),
c4) mass flow rate of air,
c5) pressure in the induction manifold,
**characterised**
d) in that the engine-specific measure for improving the cleaning effect of the exhaust-gas catalytic converter (4) is additionally initiated in a manner depending on the operating point (P) of the internal-combustion engine (1) when the operating point (P) is in an established subregion (A1, A2, ..., An) of the engine map.

2. The operating method according to Claim 1, **characterised in that** the intensity of the engine-specific measure for improving the cleaning effect of the exhaust-gas catalytic converter (4) is established flexibly in a manner depending on the operating point (P) of the internal-combustion engine (1) and in a manner depending on the ascertained catalytic-converter parameter (OSC).

3. The operating method according to one of the preceding claims, **characterised by** the following steps:
a) establishing a subregion (A1, A2,..., An) of the engine map for the engine-specific measure for improving the cleaning effect of the exhaust-gas catalytic converter (4),
b) checking whether the operating point (P) of the internal-combustion engine (1) lies within the subregion (A1, A2, ..., An), and
c) implementing the engine-specific measure for improving the cleaning effect of the exhaust-gas catalytic converter (4) only when the operating point (P) of the internal-combustion engine (1) lies within the established subregion (A1, A2,..., An) of the engine map.

4. The operating method according to Claim 3, **characterised in that** the subregion (A1, A2,..., An) of the engine map for the engine-specific measure for improving the cleaning effect of the exhaust-gas catalytic converter (4) is established in a manner depending on the ascertained catalytic-converter parameter (OSC).

5. The operating method according to Claim 4, **characterised by** the following steps:
a) ascertaining the position of the operating point (P) of the internal-combustion engine (1) within the subregion (A1, A2, ..., An) of the engine map, and
b) establishing the intensity of the engine-specific measure for improving the cleaning effect of the exhaust-gas catalytic converter (4) in a manner depending on the position of the operating point within the subregion (A1, A2, ..., An) of the engine map.

6. The operating method according to one of Claims 3 to 5, **characterised**
a) **in that** the engine-specific measure for improving the cleaning effect of the exhaust-gas catalytic converter (4) increases the fuel consumption of the internal-combustion engine (1), and
b) **in that** the increase in the fuel consumption depends on the operating point (P) at which the engine-specific measure for improving the cleaning effect of the exhaust-gas catalytic converter (4) is implemented, and
c) **in that** the subregion (A1, A2, ..., An) of the engine map for the implementation of the engine-specific measure for improving the cleaning effect of the exhaust-gas catalytic converter (4) is increasingly extended with increasing deterioration of the catalytic-converter parameter (OSC), and
d) **in that** the extension of the subregion (A1, A2, ..., An) of the engine map for the implementation of the engine-specific measure for improving the cleaning effect of the exhaust-gas catalytic converter (4) proceeds from a region (A1) with a relatively small increase in the fuel consumption as far as a region (An) with a relatively large increase in the fuel consumption.

7. The operating method according to one of the preceding claims,
**characterised**
a) **in that** in the internal-combustion engine (1) a fuel/air mixture is ignited in each instance at a definite ignition angle (ZW), and
b) **in that** the engine-specific measure for improving the cleaning effect of the exhaust-gas catalytic converter (4) includes an adjustment of the ignition angle (ZW), in particular in the direction of a later ignition point.

8. The operating method according to one of the preceding claims,
**characterised**
a) **in that** in the exhaust gas a definite lambda value (λ) is set which represents the ratio of air to fuel in comparison with a stoichiometric mixture, and
b) **in that** the engine-specific measure for improving the cleaning effect of the exhaust-gas catalytic converter (4) includes a change of the lambda value (λ), in particular towards a richer fuel/air mixture.

9. A drive system, in particular for a motor vehicle, with
a) an internal-combustion engine (1), namely a spark-ignition engine, in particular a gas engine operated by a spark-ignition engine,
b) an exhaust-gas catalytic converter (4), namely a three-way catalytic converter, in the exhaust-gas train of the internal-combustion engine (1), and
c) a control unit (6), wherein
c1) the control unit (8) ascertains a catalytic-converter parameter (OSC) of the exhaust-gas catalytic converter (4), wherein the ascertained catalytic-converter parameter (OSC)
c1a) is the oxygen storage capacity of the exhaust-gas catalytic converter (4) and
c1b) represents the cleaning effect of the exhaust-gas catalytic converter (4) and
c1c) is preferentially ascertained only once during a driving cycle between starting and stopping the engine, and
c2) the control unit (8) ascertains an operating point (P) of the internal-combustion engine (1) within an engine map, wherein the ascertained operating point (P) of the internal-combustion engine (1) represents at least two of the following quantities:
c2a) rotational speed (n) of the crankshaft,
c2b) rotational speed of the camshaft
c2c) load torque (M),
c2d) mass flow rate of air,
c2e) pressure in the induction manifold,
and
c3) the control unit (8) implements the engine-specific measure for improving the cleaning effect of the exhaust-gas catalytic converter (4) if the catalytic-converter parameter (OSC) indicates an inadequate cleaning effect of the exhaust-gas catalytic converter (4),
**characterised**
d) in that the control unit (6) additionally implements the engine-specific measure for improving the cleaning effect of the exhaust-gas catalytic converter (4) in a manner depending on the operating point (P) of the internal-combustion engine (1) when the operating point (P) is in an established subregion (A1, A2,...,An) of the engine map.

10. A motor vehicle, in particular a commercial vehicle, in particular a lorry or bus, with a drive system according to Claim 9.

## Revendications

1. Procédé de conduite d'une installation d'épuration de gaz d'échappement avec un catalyseur de gaz d'échappement (4), à savoir un catalyseur à trois voies, pour l'épuration des gaz d'échappement d'un moteur à combustion interne (1), qui est constitué par un moteur Otto, en particulier dans un véhicule automobile, comportant les étapes suivantes:
a) déterminer une grandeur caractéristique de catalyseur (OSC) du catalyseur de gaz d'échappement (4), dans lequel la grandeur caractéristique de catalyseur (OSC) est la capacité d'accumulation d'oxygène du catalyseur de gaz d'échappement (4) et représente l'effet d'épuration du catalyseur de gaz d'échappement (4), et
b) exécuter une mesure motorisée pour l'amélioration de l'effet d'épuration du catalyseur de gaz d'échappement (4), lorsque la grandeur caractéristique de catalyseur (OSC) indique un effet d'épuration insuffisant du catalyseur de gaz d'échappement (4), et
c) déterminer un point de fonctionnement (P) du moteur à combustion interne (1) dans un champ caractéristique du moteur, dans lequel le point de fonctionnement (P) du moteur à combustion interne (1) représente au moins deux des grandeurs suivantes:
c1) nombre de tours (n) du vilebrequin,
c2) nombre de tours de l'arbre à cames,
c3) couple de charge (M),
c4) débit massique d'air,
c5) pression dans la tubulure d'admission,
**caractérisé en ce que**
d) la mesure motorisée pour l'amélioration de l'effet d'épuration du catalyseur de gaz d'échappement (4) est appliquée en outre en fonction du point de fonctionnement (P) du moteur à combustion interne (1), lorsque le point de fonctionnement (P) est situé dans une région partielle déterminée (A1, A2, .., An) du champ caractéristique du moteur.

2. Procédé de conduite selon la revendication 1, **caractérisé en ce que** l'intensité de la mesure motorisée pour l'amélioration de l'effet d'épuration du catalyseur de gaz d'échappement (4) est déterminée de façon flexible en fonction du point de fonctionnement (P) du moteur à combustion interne (1) et en fonction de la grandeur caractéristique de catalyseur (OSC) déterminée.

3. Procédé de conduite selon l'une quelconque des revendications précédentes, **caractérisé par** les étapes suivantes:
a) déterminer la région partielle (A1, A2, .., An) du champ caractéristique du moteur pour la mesure motorisée pour l'amélioration de l'effet d'épuration du catalyseur de gaz d'échappement (4),
b) contrôler si le point de fonctionnement (P) du moteur à combustion interne (1) est situé à l'intérieur de la région partielle (A1, A2, .., An), et
c) exécuter la mesure motorisée pour l'amélioration de l'effet d'épuration du catalyseur de gaz d'échappement (4), uniquement lorsque le point de fonctionnement (P) du moteur à combustion interne (1) est situé à l'intérieur de la région partielle déterminée (A1, A2, .., An) du champ caractéristique du moteur.

4. Procédé de conduite selon la revendication 3, **caractérisé en ce que** la région partielle (A1, A2, .., An) du champ caractéristique du moteur pour la mesure motorisée pour l'amélioration de l'effet d'épuration du catalyseur de gaz d'échappement (4) est déterminée en fonction de la grandeur caractéristique de catalyseur déterminée (OSC).

5. Procédé de conduite selon la revendication 4, **caractérisé par** les étapes suivantes:
a) déterminer la position du point de fonctionnement (P) du moteur à combustion interne (1) à l'intérieur de la région partielle (A1, A2, .., An) du champ caractéristique du moteur, et
b) fixer l'intensité de la mesure motorisée pour l'amélioration de l'effet d'épuration du catalyseur de gaz d'échappement (4) en fonction de la position du point de fonctionnement à l'intérieur de la région partielle (A1, A2, .., An) du champ caractéristique du moteur.

6. Procédé de conduite selon l'une quelconque des revendications 3 à 5, **caractérisé en ce que**
a) la mesure motorisée pour l'amélioration de l'effet d'épuration du catalyseur de gaz d'échappement (4) augmente la consommation de carburant du moteur à combustion interne (1), et
b) l'augmentation de la consommation de carburant dépend du point de fonctionnement (P), auquel la mesure motorisée pour l'amélioration de l'effet d'épuration du catalyseur de gaz d'échappement (4) est exécutée, et
c) la région partielle (A1, A2, .., An) du champ caractéristique du moteur pour l'exécution de la mesure motorisée pour l'amélioration de l'effet d'épuration du catalyseur de gaz d'échappement (4) est étendue de façon croissante avec une dégradation croissante de la grandeur caractéristique de catalyseur (OSC), et
d) l'extension de la région partielle (A1, A2, .., An) du champ caractéristique du moteur pour l'exécution de la mesure motorisée pour l'amélioration de l'effet d'épuration du catalyseur de gaz d'échappement (4) démarre d'une région (A1) avec une augmentation relativement faible de la consommation de carburant vers une région (An) avec une augmentation relativement élevée de la consommation de carburant.

7. Procédé de conduite selon l'une quelconque des revendications précédentes, **caractérisé en ce que**
a) on allume un mélange carburant-air dans le moteur à combustion interne (1) respectivement à un angle d'allumage déterminé (ZW), et
b) la mesure motorisée pour l'amélioration de l'effet d'épuration du catalyseur de gaz d'échappement (4) comprend un déplacement de l'angle d'allumage (ZW), en particulier en direction d'un instant d'allumage plus tardif.

8. Procédé de conduite selon l'une quelconque des revendications précédentes, **caractérisé en ce que**
a) on règle dans les gaz d'échappement une valeur de lambda déterminée (λ), qui représente le rapport de l'air au carburant par comparaison avec un mélange stoechiométrique, et
b) la mesure motorisée pour l'amélioration de l'effet d'épuration du catalyseur de gaz d'échappement (4) comprend une variation de la valeur de lambda (λ), en particulier vers un mélange carburant-air plus riche.

9. Système d'entraînement, en particulier pour un véhicule automobile, avec
a) un moteur à combustion interne (1), à savoir un moteur Otto, en particulier un moteur à gaz entraîné en moteur Otto,
b) un catalyseur de gaz d'échappement (4), à savoir un catalyseur à trois voies, dans la ligne des gaz d'échappement du moteur à combustion interne (1), et
c) une unité de commande (6), dans lequel
c1) l'unité de commande (8) détermine une grandeur caractéristique de catalyseur (OSC) du catalyseur de gaz d'échappement (4), dans lequel la grandeur caractéristique de catalyseur (OSC)
c1a) est la capacité d'accumulation d'oxygène du catalyseur de gaz d'échappement (4) et
c1b) représente l'effet d'épuration du catalyseur de gaz d'échappement (4), et
c1c) n'est de préférence déterminée qu'une seule fois pendant un cycle de marche entre un démarrage du moteur et un arrêt du moteur, et
c2) l'unité de commande (8) détermine un point de fonctionnement (P) du moteur à combustion interne (1) à l'intérieur d'un champ caractéristique du moteur, dans lequel le point de fonctionnement déterminé (P) du moteur à combustion interne (1) représente au moins deux des grandeurs suivantes:
c2a) nombre de tours (n) du vilebrequin,
c2b) nombre de tours de l'arbre à cames,
c2c) couple de charge (M),
c2d) débit massique d'air,
c2e) pression dans la tubulure d'admission,
et
c3) l'unité de commande (8) exécute les mesures motorisées pour l'amélioration de l'effet d'épuration du catalyseur de gaz d'échappement (4), lorsque la grandeur caractéristique de catalyseur (OSC) indique un effet d'épuration insuffisant du catalyseur de gaz d'échappement (4),
**caractérisé en ce que**
d) l'unité de commande (6) exécute la mesure motorisée pour l'amélioration de l'effet d'épuration du catalyseur de gaz d'échappement (4) en outre en fonction du point de fonctionnement (P) du moteur à combustion interne (1), lorsque le point de fonctionnement (P) est situé dans une région partielle déterminée (A1, A2, .., An) du champ caractéristique du moteur.

10. Véhicule automobile, en particulier véhicule utilitaire, en particulier camion ou autobus, muni d'un système d'entraînement selon la revendication 9.
